# DEMANDE DE BREVET EUROPEEN

(11) **EP 4 147 906 A1**
(43) Date de publication de la demande: **15.03.2023**
(21) Numéro de dépôt: 22189372.0
(22) Date de dépôt: 09.08.2022
(51) Int. Cl.: B60N 2/75, B61D 33/00, B64D 11/06

(54) **ACCOUDOIR-SÉPARATEUR POUR SIÈGE DE VÉHICULE DE TRANSPORT**

(30) Priorité: 10.09.2021 FR 2109537
(71) Demandeur: SNCF Voyageurs, 93200 Saint-Denis (FR)
(72) Inventeur: PETAIN, Jean-Pierre, 67310 ROMANSWILLER (FR); GOUWY, Xavier, 67370 RUMERSHEIM (FR); POIRIER, Christophe, 72330 YVRE LE POLIN (FR); SPITZ, Thomas, 67230 SAND (FR)
(74) Mandataire: IPAZ

(57) **Abrégé**

L'invention se rapporte à un dispositif (6) d'accoudement et/ou de séparation pour siège de véhicule de transport, comprenant une poutre (12) destinée à être reliée au siège et une manchette amovible dotée d'une cavité longitudinale configurée pour s'emboîter sur la poutre (12).

## Description

### Domaine technique

L'invention se rapporte au domaine des accoudoirs et des séparateurs pour sièges de véhicule de transport.

L'invention présente un intérêt particulier dans le secteur du transport collectif, notamment ferroviaire, automobile ou encore aéronautique.

### État de la technique antérieure

De nombreux véhicules de transport, en particulier de transport ferroviaire, comprennent des sièges équipés d'accoudoirs et/ou de séparateurs.

Le terme « accoudoir » désigne généralement un dispositif dont la fonction première est d'améliorer le confort d'un passager, en lui permettant d'y reposer un bras, typiquement dans le cadre d'un voyage de durée relativement longue. Pour améliorer le confort du passager, il est préférable de maximiser la largeur de l'accoudoir.

Le terme « séparateur » désigne généralement un dispositif dont la fonction première est de marquer la séparation entre deux sièges adjacents, par exemple lorsque ces sièges forment une banquette, typiquement dans le cadre d'un voyage de durée relativement courte. Pour limiter la réduction de l'espace d'assise des passagers, il est préférable de réduire la largeur du séparateur.

Bien entendu, un séparateur peut aussi être utilisé comme accoudoir et un accoudoir interposé entre deux sièges adjacents constitue de facto un séparateur.

Dans le secteur ferroviaire, les accoudoirs et les séparateurs de matériels roulants conventionnels comprennent des pièces différentes, qui ne sont pas interchangeables, notamment compte tenu des exigences dimensionnelles respectives de ces dispositifs. Cela nécessite de fabriquer et stocker plusieurs types de pièces de remplacement et de mettre en œuvre des opérations de maintenance propres à chacun de ces dispositifs.

### Exposé de l'invention

De manière générale, l'invention vise à faciliter une ou plusieurs opérations parmi la fabrication, le montage, la maintenance et le stockage d'accessoires de siège formant des accoudoirs et/ou des séparateurs.

Un but particulier de l'invention est d'uniformiser tout ou partie de tels accessoires, typiquement les parties d'usure qui nécessitent d'être régulièrement remplacées.

Un autre but de l'invention est de procurer un dispositif pouvant former, à l'aide des mêmes éléments, soit un accoudoir soit un séparateur.

A cet effet, l'invention a pour objet un dispositif d'accoudement et/ou de séparation pour siège de véhicule de transport, comprenant une poutre destinée à être reliée au siège et une manchette amovible dotée d'une cavité longitudinale configurée pour s'emboîter sur la poutre. Selon l'invention, la poutre et la cavité longitudinale de la manchette présentent chacune une section symétrique par rapport à un premier plan longitudinal et symétrique par rapport à un deuxième plan longitudinal perpendiculaire au premier plan longitudinal.

Un tel dispositif permet de dissocier une partie d'usure du dispositif, formée par la manchette, des autres parties du dispositif tout en facilitant l'assemblage de la manchette avec la poutre ainsi que son remplacement dans le cadre d'une opération de maintenance.

En particulier, l'emboîtement de la manchette sur la poutre, ou son retrait, nécessite une simple translation de la manchette par rapport à la poutre.

La double symétrie de la section de la poutre et de la cavité longitudinale permet d'une part de simplifier la fabrication du dispositif.

D'autre part, en utilisant une manchette présentant des dimensions extérieures différentes selon lesdits premier et deuxième plans longitudinaux, une telle double symétrie permet de former avec une même manchette soit un accoudoir soit un séparateur en fonction de l'orientation de la manchette relativement à la poutre.

De plus, l'invention permet aussi d'utiliser une même poutre pour porter une manchette configurée pour former soit un accoudoir soit un séparateur.

L'invention permet ainsi de simplifier notamment la fabrication, le montage et la maintenance d'un dispositif pouvant former un accoudoir et/ou un séparateur.

A titre d'exemple non limitatif, la poutre et la cavité longitudinale de la manchette peuvent présenter une section carrée.

De préférence, la manchette forme deux premières surfaces extérieures parallèles, ou sensiblement parallèles, l'une à l'autre et deux deuxièmes surfaces extérieures parallèles, ou sensiblement parallèles, l'une à l'autre et perpendiculaires aux premières surfaces, les premières surfaces étant espacées l'une de l'autre de manière à définir une première largeur de manchette supérieure ou égale à une largeur de référence, les deuxièmes surfaces étant espacées l'une de l'autre de manière à définir une deuxième largeur de manchette inférieure à la largeur de référence.

A titre d'exemple, la largeur de référence peut être de 40 mm.

Ainsi, selon une première orientation de la manchette, l'une de ses premières surfaces extérieures peut former une surface d'appui relativement large, le dispositif formant ainsi un accoudoir.

En cas d'usure de cette première surface extérieure, la manchette peut être disposée selon une deuxième orientation de sorte que la surface d'appui soit constituée par l'autre desdites premières surfaces extérieures.

Selon une troisième orientation de la manchette, la surface d'appui est formée par l'une des deuxièmes surfaces extérieures. Cette surface étant relativement étroite, le dispositif peut ainsi former un séparateur.

En cas d'usure de cette deuxième surface extérieure, la manchette peut être disposée selon une quatrième orientation de sorte que la surface d'appui soit constituée par l'autre desdites deuxièmes surfaces extérieures.

Ainsi, l'usure d'une surface d'appui ne nécessite pas de remplacer systématiquement la manchette puisque, lorsque la surface en vis-à-vis n'est pas encore usée, celle-ci peut former une nouvelle surface d'appui par retournement de la manchette.

Plus généralement, l'invention permet ainsi de procurer un dispositif pouvant former, à l'aide des mêmes éléments et en l'occurrence de la même manchette, soit un accoudoir soit un séparateur, ce qui permet de réduire le nombre de types de pièces d'usure à stocker.

Dans un mode de réalisation, le dispositif comprend des moyens de retenue de la manchette.

Selon une première variante, les moyens de retenue comprennent au moins un organe élastique interposé entre la poutre et la manchette.

Selon une deuxième variante, les moyens de retenue comprennent au moins un organe de fixation tel qu'une vis.

Selon une troisième variante, les moyens de retenue comprennent un rétrécissement de section de la poutre et/ou de la cavité longitudinale de la manchette, autorisant un montage à force.

Ces différentes variantes peuvent être mises en œuvre séparément ou en combinaison.

Dans un mode de réalisation, le dispositif comprend un mécanisme d'articulation configuré pour relier la poutre au siège de manière à autoriser un déplacement de la poutre par rapport au siège entre une position d'utilisation et une position escamotée.

L'escamotage du dispositif permet de faciliter l'accès au siège et d'augmenter l'espace disponible pour le ou les passager(s).

Dans un mode de réalisation, le mécanisme d'articulation comprend un palier destiné à être fixé au siège, un arbre relié au palier et une noix solidaire de la poutre et montée à rotation sur l'arbre.

Le mécanisme d'articulation peut bien entendu intégrer des options permettant d'améliorer le confort d'utilisation du dispositif.

Ainsi, dans un mode de réalisation, le mécanisme d'articulation comprend un organe de friction prévu pour empêcher un déplacement inopiné de la poutre entre la position escamotée et la position d'utilisation.

L'invention a aussi pour objets un siège pour véhicule de transport, comprenant au moins un dispositif d'accoudement et/ou de séparation tel que défini ci-dessus, et un véhicule de transport comprenant au moins un tel siège.

Dans un mode de réalisation, le véhicule de transport est un véhicule de transport ferroviaire.

Selon un autre aspect, l'invention a pour objet un procédé de montage d'un dispositif tel que défini ci-dessus.

Dans un mode de mise en œuvre, ce procédé comprend une étape d'emboîtement de la manchette sur la poutre.

L'emboîtement de la manchette est de préférence réalisé par translation de la manchette selon une direction parallèle à un axe défini par la poutre.

L'invention a aussi pour objet un procédé de maintenance d'un tel dispositif.

Selon une première variante, ce procédé de maintenance peut comprendre une étape de retrait de la manchette de la poutre et une étape d'emboîtement d'une manchette de remplacement.

Selon une deuxième variante, ce procédé de maintenance peut comprendre une étape de retrait de la manchette de la poutre et une étape d'emboîtement de cette manchette selon une nouvelle orientation.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en perspective d'une rangée de sièges comprenant des dispositifs accoudoir-séparateur conformes à l'invention ;
[Fig. 2] est une vue schématique en perspective d'un dispositif accoudoir-séparateur selon un premier mode de réalisation de l'invention ;
[Fig. 3] est une vue schématique en perspective d'une poutre et d'un organe de liaison du dispositif de la figure 2 ;
[Fig. 4] est une vue schématique en perspective d'une manchette du dispositif de la figure 2 ;
[Fig. 5] est une vue schématique en perspective d'une extrémité de la manchette de la figure 4 ;
[Fig. 6] est une vue schématique en coupe de l'organe de liaison du dispositif de la figure 2 et d'une partie d'un siège auquel le dispositif est relié ;
[Fig. 7] est une vue schématique en perspective de la poutre et de l'organe de liaison du dispositif de la figure 2, montrant un organe élastique de retenue porté par la poutre ;
[Fig. 8] est une vue schématique en perspective et en coupe longitudinale de la manchette du dispositif de la figure 2, montrant un logement pour l'organe élastique de la figure 7 ;
[Fig. 9] est une vue schématique en perspective d'une poutre et d'un organe de liaison d'un dispositif accoudoir-séparateur selon un deuxième mode de réalisation de l'invention, montrant un organe élastique de retenue porté par la poutre ;
[Fig. 10] est une vue schématique en perspective d'un dispositif accoudoir-séparateur selon un troisième mode de réalisation de l'invention, montrant des vis de fixation de manchette.

### Description détaillée de modes de réalisation

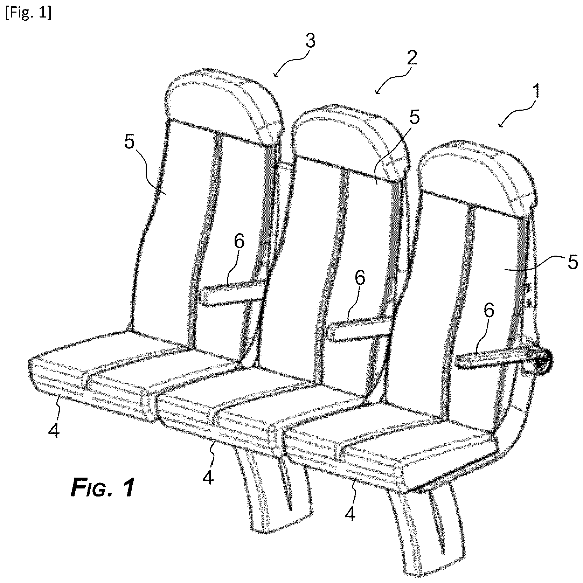

Il est représenté sur la figure 1 une rangée de sièges 1, 2 et 3 d'un véhicule de transport ferroviaire.

Chacun de ces sièges 1-3 comprend une assise 4, un dossier 5 et un dispositif 6 d'accoudement-séparation relié au dossier 5.

Dans cet exemple, le dispositif 6 du siège 1 s'étend latéralement sur un côté de ce siège 1 adjacent à un couloir du véhicule. Le dispositif 6 du siège 2 s'étend entre les sièges 1 et 2 qui sont adjacents l'un par rapport à l'autre, formant ainsi un séparateur entre les sièges 1 et 2. De manière analogue, le dispositif 6 du siège 3 s'étend entre les sièges 2 et 3 qui sont adjacents l'un par rapport à l'autre, formant ainsi un séparateur entre les sièges 2 et 3.

Chacun de ces dispositifs 6 peut être utilisé en tant qu'accoudoir.

La description qui suit présente différents modes de réalisation d'un dispositif, génériquement appelé « dispositif accoudoir-séparateur », pouvant former les dispositifs 6 de la figure 1, étant entendu qu'un dispositif accoudoir-séparateur peut être utilisé en tant qu'accoudoir et/ou en tant que séparateur, notamment en fonction de la configuration du siège auquel il est relié au sein du véhicule.

Dans la description qui suit, des éléments similaires ou analogues sont identifiés par des mêmes numéros de référence.

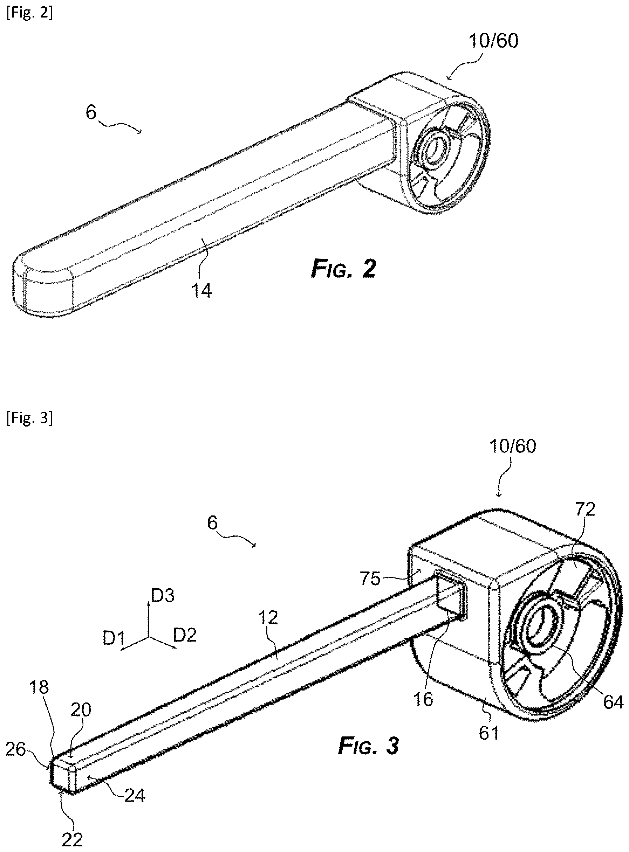

La figure 2 montre un dispositif accoudoir-séparateur 6 selon un premier mode de réalisation.

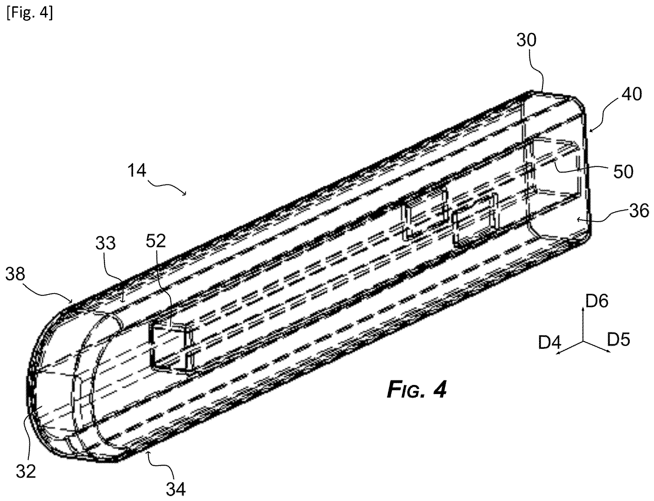

Ce dispositif 6 comprend un organe de liaison 10 et une poutre 12, visibles sur la figure 3, ainsi qu'une manchette 14 représentée séparément sur la figure 4.

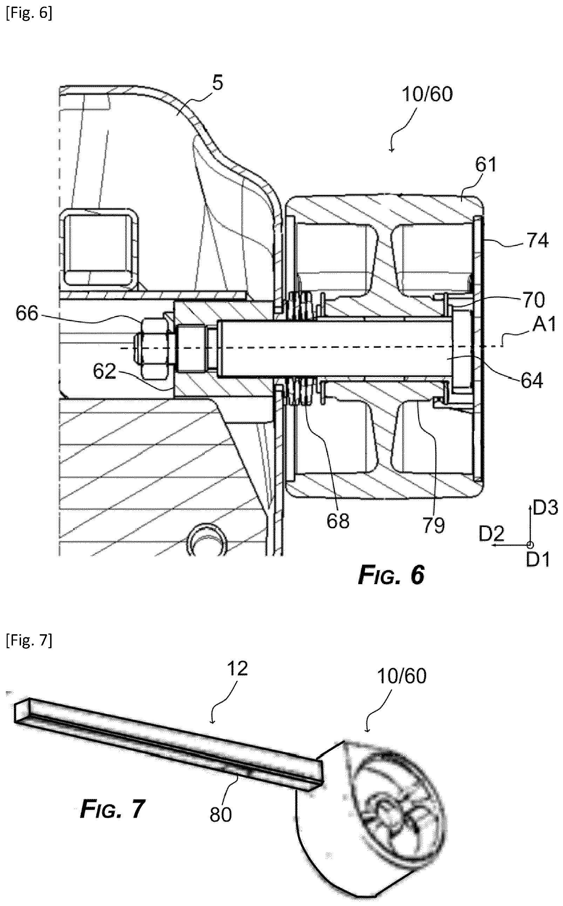

Les figures 3 et 6 comprennent un référentiel D1-D2-D3 associé au sous-ensemble formé par l'organe de liaison 10 et la poutre 12, définissant respectivement une direction longitudinale, une direction latérale et une direction transversale.

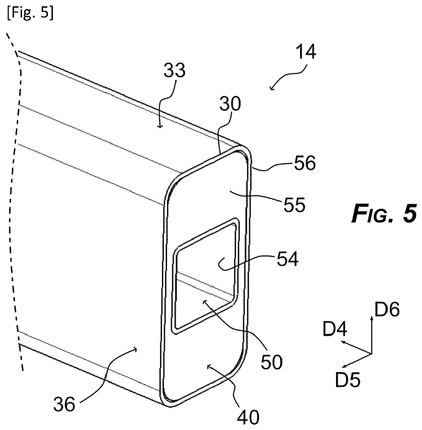

Les figures 4 et 5 comprennent un référentiel D4-D5-D6 associé à la manchette 14, définissant respectivement une direction longitudinale, une direction latérale et une direction transversale.

En référence à la figure 3, la poutre 12 s'étend le long de la direction longitudinale D1 de manière à former le long de cette direction D1 une première extrémité 16 reliée à l'organe de liaison 10 et une deuxième extrémité 18 libre.

Dans cet exemple, la poutre 12 présente une section carrée.

Plus précisément, la poutre 12 forme quatre surfaces qui s'étendent le long de la direction D1, en l'occurrence une surface supérieure 20, une surface inférieure 22, une surface latérale externe 24 et une surface latérale interne 26.

Les surfaces 20 et 22 sont chacune perpendiculaires aux surfaces 24 et 26.

Les surfaces 24 et 26 sont espacées l'une de l'autre selon la direction latérale D2, définissant une largeur de la poutre 12.

Les surfaces 20 et 22 sont espacées l'une de l'autre selon la direction transversale D3, définissant une épaisseur de la poutre 12.

La section de la poutre 12 étant carrée, sa largeur et son épaisseur sont en l'occurrence identiques.

Dans cet exemple, la section de la poutre 12 rétrécit le long de la direction D1 depuis la première extrémité 16 jusqu'à la deuxième extrémité 18. En l'occurrence, la largeur et l'épaisseur de la poutre 12 diminuent chacune de manière croissante le long de la direction D1.

Ainsi, la poutre 12 présente dans cet exemple une section symétrique, à la fois par rapport à un premier plan longitudinal fictif parallèle aux directions D1 et D3 et par rapport à un deuxième plan longitudinal fictif parallèle aux directions D1 et D2.

En référence aux figures 4 et 5, la manchette 14 présente une forme globalement parallélépipédique, s'étendant le long de la direction longitudinale D4 de manière à former le long de cette direction D4 une première extrémité 30 et une deuxième extrémité 32.

La longueur de la manchette 14, c'est-à-dire la distance entre ses extrémités 30 et 32 selon la direction D4 (voir figure 4), est supérieure à la longueur de la poutre 12, c'est-à-dire à la distance entre ses extrémités 16 et 18 selon la direction D1 (voir figure 3).

La manchette 14 présente quatre surfaces extérieures qui s'étendent le long de la direction D4, en l'occurrence une première surface 33, une deuxième surface 34, une troisième surface 36 et une quatrième surface 38.

Les surfaces 33 et 34 sont chacune perpendiculaires aux surfaces 36 et 38.

Les surfaces 36 et 38 sont espacées l'une de l'autre selon la direction latérale D5, définissant une première dimension de la manchette 14.

Les surfaces 33 et 34 sont espacées l'une de l'autre selon la direction transversale D6, définissant une deuxième dimension de la manchette 14.

Dans cet exemple, la première dimension de la manchette 14 est de 25 mm, la deuxième dimension de la manchette 14 est de 50 mm et la longueur de la manchette 14 est de 300 mm.

La première extrémité 30 de la manchette 14 forme une surface 40 plane perpendiculaire aux surfaces 33, 34, 36 et 38.

La deuxième extrémité 32 de la manchette 14 forme quant à elle une surface incurvée reliant les surfaces 33 et 34 l'une à l'autre (voir figure 4).

La manchette 14 est dotée d'une cavité 50 s'étendant le long de la direction longitudinale D4.

La cavité 50 débouche sur la surface 40 formée par la première extrémité 30 de la manchette 14 (voir figure 5) et présente un fond 52 (voir figure 4) qui est espacé de la surface 40 selon la direction D4 d'une distance légèrement supérieure à la longueur de la poutre 12.

La cavité 50 a une géométrie complémentaire à celle de la poutre 12 et présente donc dans cet exemple une section carrée.

Plus précisément, la cavité 50 est délimitée par quatre surfaces intérieures formées par la manchette 14 qui s'étendent le long de la direction D4, dont deux sont espacées l'une de l'autre selon la direction latérale D5 en définissant une première dimension de la cavité 50 et deux autres sont espacées l'une de l'autre selon la direction transversale D6 en définissant une deuxième dimension de la cavité 50.

De la même manière que la poutre 12, la section de la cavité 50 rétrécit le long de la direction D4 depuis la première extrémité 30 de la manchette 14 jusqu'au fond 52 de la cavité 50.

Ainsi, la cavité 50 présente dans cet exemple une section symétrique à la fois par rapport à un premier plan longitudinal fictif parallèle aux directions D4 et D6 et par rapport à un deuxième plan longitudinal fictif parallèle aux directions D4 et D5.

Dans cet exemple, la première et la deuxième dimension de la cavité 50 sont chacune légèrement supérieures à la largeur et à l'épaisseur de la poutre 12, de manière à pouvoir introduire la poutre 12 dans la cavité 50 de la manchette 14.

La manchette 14 comprend dans cet exemple plusieurs matériaux superposés, incluant une enveloppe 54 interne délimitant la cavité 50, une garniture 55 et un revêtement 56 externe (voir figure 5).

Dans cet exemple, l'enveloppe 54 est réalisée dans un matériau rigide, du type plastique ou métal, par moulage ou usinage. La garniture 55 comprend un matériau souple ou semi-rigide, élastiquement déformable, tel qu'une mousse permettant d'améliorer le confort lors de l'utilisation de la manchette 14 en tant qu'accoudoir. Le revêtement 56 comprend un matériau confortable au toucher et/ou à la vue qui peut être souple, par exemple du cuir ou du tissu, ou rigide, par exemple du bois ou du plastique, ou une combinaison de tels matériaux.

Selon une première variante de fabrication, notamment compatible avec un revêtement 56 en matériau rigide, la garniture 55 est moulée directement entre l'enveloppe 54 et le revêtement 56.

Le cas échéant, le revêtement 56 peut être thermoformé ou usiné.

Selon une deuxième variante de fabrication, notamment compatible avec un revêtement 56 en matériau souple, la garniture 55 est moulée sur l'enveloppe 54 et le revêtement 56 est ensuite fixé sur la garniture 55, par exemple par collage, agrafage ou couture.

En référence aux figures 3 et 6, l'organe de liaison 10 est configuré pour relier la poutre 12 au dossier 5 d'un siège.

Dans cet exemple, l'organe de liaison 10 abrite un mécanisme d'articulation 60 autorisant un déplacement de la poutre 12 par rapport au siège entre une position d'utilisation, illustrée sur la figure 1, et une position escamotée dans laquelle la poutre 12 s'étend sensiblement le long du dossier 5 (non représentée).

Dans cet exemple, le mécanisme d'articulation 60 comprend un corps 61, un palier 62, un arbre 64, un écrou 66, un ressort 68, un organe de friction 70, un organe de butée 72 et un cache 74.

Le corps 61, aussi appelé « noix », porte la poutre 12 de sorte que celle-ci s'étende au droit d'une surface plane 75 du corps 61 et soit solidaire du corps 61 en rotation autour d'un axe A1 formé par l'arbre 64.

A cet effet, la poutre 12 et le corps 61 peut être fabriqués par moulage, thermoformage ou usinage, soit séparément puis assemblés par soudage ou collage, soit d'une seule pièce.

Le palier 62 est encastré dans un logement formé par le dossier 5 du siège (voir figure 6).

Une première partie de l'arbre 64 est reçue dans le palier 62 et bridée au palier 62 par l'écrou 66.

Une deuxième partie de l'arbre 64 dépasse latéralement du dossier 5 de manière à porter la corps 61 qui est monté à rotation sur l'arbre 64, autour de l'axe A1.

Pour ce faire, le corps 61 comprend un élément de liaison 79 pourvu d'un orifice traversant cet élément de liaison 79 latéralement.

Le ressort 68 est interposé entre le palier 62 et une extrémité latérale de l'élément de liaison 79 de manière à exercer une précontrainte latérale.

L'extrémité latérale opposée de l'élément de liaison 79 est en appui sur un épaulement de l'arbre 64.

Ce mécanisme d'articulation 60 permet de déplacer la poutre 12 entre la position d'utilisation et la position escamotée sous l'action d'un effort exercé sur la poutre 12, entraînant le corps 61 en rotation autour de l'axe A1.

L'organe de friction 70 permet de maintenir le dispositif 6 en position escamotée et d'éviter que celui-ci ne revienne en position d'utilisation uniquement sous l'action de la gravité, en l'absence d'un effort suffisant exercé sur la poutre 12.

L'organe de butée 72, solidaire de l'arbre 64, est configuré de sorte qu'une première partie de butée du corps 61 vienne en appui sur cet organe 72 lorsque le dispositif 6 est en position d'utilisation, afin d'empêcher un déplacement du dispositif 6 au-delà de cette position d'utilisation, et de sorte qu'une deuxième partie de butée du corps 61 vienne en appui sur cet organe 72 lorsque le dispositif 6 est en position escamotée, afin d'empêcher un déplacement du dispositif 6 au-delà de cette position escamotée.

Le cache 74 est prévu pour masquer et protéger l'intérieur du mécanisme 60, protéger les passagers et améliorer l'esthétique du dispositif.

Dans cet exemple, le corps 61 présente une largeur selon la direction D2 sensiblement identique à ladite deuxième dimension de la manchette 14, soit environ 50 mm, et une hauteur selon la direction D3 d'environ 50 mm.

Le sous-ensemble constitué par la noix 61 et la poutre 12, aussi appelé « support », présente une longueur selon la direction D1 d'environ 320 mm.

En référence aux figures 3, 7 et 8, le dispositif 6 comprend des moyens de retenue comprenant un organe élastique 80 et des logements 82 correspondants.

L'organe élastique 80, visible sur la figure 7, est porté par la poutre 12 et s'étend au droit de la surface inférieure 22 de la poutre 12.

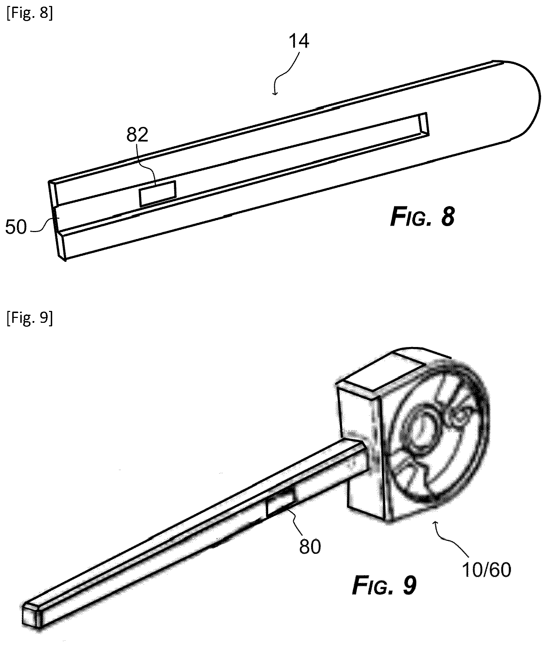

Les logements 82, dont l'un est visible sur la figure 8, sont formés par la manchette 14 de manière à déboucher dans la cavité 50.

Ces logements 82 sont configurés de sorte que, lorsque la manchette 14 emboîte la poutre 12 selon une orientation correspondante (voir plus loin ci-dessous), une partie de l'organe élastique 80 soit reçue dans l'un ou l'autre de ces logements 82 de manière à maintenir la manchette 14 sur la poutre 12.

Dans cet exemple, les logements 82 sont configurés pour permettre à un opérateur de maintenance de déplacer l'organe élastique 80 avec un doigt ou un outil, par déformation du revêtement 56 et de la garniture 55 de la manchette 14 au droit du logement 82 correspondant.

Les différents éléments du dispositif 6 qui vient d'être décrit permettent d'emboîter ou enchâsser la manchette 14 sur la poutre 12, par translation de la manchette 14 en faisant pénétrer la poutre 12 dans la cavité 50 jusqu'à ce que la surface 40 de la manchette 14 vienne en appui sur la surface 75 du corps 61, cela selon l'une quelconque parmi les quatre orientations suivantes.

Une première orientation est illustrée sur la figure 2. Selon cette première orientation, la surface 33 de la manchette 14 s'étend du côté de la surface latérale interne 26 de la poutre 12, la surface 34 de la manchette 14 s'étend du côté de la surface latérale externe 24 de la poutre 12, la surface 36 de la manchette 14 s'étend du côté de la surface supérieure 20 de la poutre 12 et la surface 38 de la manchette 14 s'étend du côté de la surface inférieure 22 de la poutre 12. Dans cette première orientation, la surface 36 de la manchette 14 forme une surface d'appui ou d'accoudement présentant une largeur relativement grande, définit par ladite deuxième dimension de la manchette 14.

Selon une deuxième orientation, la surface 33 de la manchette 14 s'étend du côté de la surface latérale externe 24 de la poutre 12, la surface 34 de la manchette 14 s'étend du côté de la surface latérale interne 26 de la poutre 12, la surface 36 de la manchette 14 s'étend du côté de la surface inférieure 22 de la poutre 12 et la surface 38 de la manchette 14 s'étend du côté de la surface supérieure 20 de la poutre 12. Dans cette deuxième orientation, symétrique à la première orientation, la surface d'accoudement est formée par la surface 38 de la manchette 14 qui présente la même largeur que dans la première configuration.

Ainsi, par exemple en cas d'usure de la surface 36 de la manchette 14 disposée selon la première orientation, celle-ci peut être retirée et retournée de manière à la disposer selon la deuxième orientation.

La première et la deuxième orientation permettent d'utiliser le dispositif en tant qu'accoudoir par exemple pour des trajets de longue durée, la largeur de la surface d'appui 36 et 38 étant relativement grande, dans cet exemple d'environ 50 mm.

Selon une troisième orientation, la surface 33 de la manchette 14 s'étend du côté de la surface supérieure 20 de la poutre 12, la surface 34 de la manchette 14 s'étend du côté de la surface inférieure 22 de la poutre 12, la surface 36 de la manchette 14 s'étend du côté de la surface latérale externe 24 de la poutre 12 et la surface 38 de la manchette 14 s'étend du côté de la surface latérale interne 26 de la poutre 12. Dans cette troisième orientation, la surface 33 de la manchette 14 forme une surface d'appui ou d'accoudement présentant une largeur relativement petite, définit par ladite première dimension de la manchette 14.

Selon une quatrième orientation, la surface 33 de la manchette 14 s'étend du côté de la surface inférieure 22 de la poutre 12, la surface 34 de la manchette 14 s'étend du côté de la surface supérieure 20 de la poutre 12, la surface 36 de la manchette 14 s'étend du côté de la surface latérale interne 26 de la poutre 12 et la surface 38 de la manchette 14 s'étend du côté de la surface latérale externe 24 de la poutre 12. Dans cette quatrième orientation, symétrique à la troisième orientation, la surface d'accoudement est formée par la surface 34 de la manchette 14 qui présente la même largeur que dans la troisième configuration.

Ainsi, par exemple en cas d'usure de la surface 33 de la manchette 14 disposée selon la troisième orientation, celle-ci peut être retirée et retournée de manière à la disposer selon la quatrième orientation.

La troisième et la quatrième orientation permettent d'utiliser le dispositif en tant que séparateur par exemple pour des trajets de courte durée, la largeur de la surface d'appui 33 et 34 étant relativement petite, dans cet exemple d'environ 25 mm.

Il est préféré que la dimension de la noix 61, en particulier sa largeur, soit adaptée à la finalité du dispositif et notamment aux orientations privilégiées de la manchette 14 (première et deuxième orientations versus troisième et quatrième orientations).

Ainsi, dans l'exemple décrit ci-dessus, la noix 61 présente une largeur identique à la première dimension de la manchette 14 (voir figure 2).

Plus généralement, il est préféré que la largeur de la noix 61 soit proche ou identique de la largeur de la surface de la manchette 14 constituant la surface d'accoudement effective.

En référence à la figure 9, lorsque la manchette 14 est destinée à être disposée selon la troisième ou la quatrième orientation, l'organe élastique 80 s'étend dans cet exemple au droit de la surface latérale externe 24 de la poutre 12.

Cela permet d'utiliser la même manchette 14 décrite ci-dessus pour différentes applications de sorte que l'un de ses logements 82 puisse coopérer soit avec l'organe élastique 80 d'un support tel qu'illustré sur la figure 7 en plaçant la manchette 14 selon la première ou la deuxième orientation, soit avec l'organe élastique 80 d'un support tel qu'illustré sur la figure 9 en plaçant la manchette 14 selon la troisième ou la quatrième orientation.

La manchette 14 constitue ainsi une pièce d'usure amovible dont le montage et le démontage sont particulièrement faciles.

En cas d'usure de deux des surfaces externes opposées de la manchette 14, une manchette identique peut être utilisée en remplacement de la manchette 14 usée.

Dans les exemples décrits ci-dessus, quelle que soit l'orientation de la manchette 14, la poutre 12 assure, compte tenu de sa géométrie, à la fois une fonction de guidage et une fonction de détrompeur empêchant une disposition de la manchette 14 selon une orientation différente de celles décrites ci-dessus.

Les moyens de retenue décrits ci-dessus peuvent être autrement agencés et/ou être complétés ou substitués par des organes de fixation de nature différente.

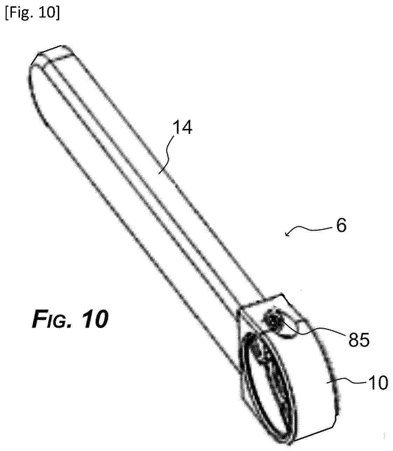

Par exemple, dans le mode de réalisation de la figure 10, la manchette 14 comprend des inserts taraudés (non représentés) coopérant avec des vis 85 (une seule étant visible sur cette figure) portés par l'organe de liaison 10 de manière à fixer la manchette 14 sur l'organe de liaison 10.

Bien entendu, de nombreuses modifications peuvent être apportées aux modes de réalisation décrits ci-dessus sans sortir du cadre de l'invention, notamment concernant la géométrie et la dimension des différentes pièces du dispositif 6. Par exemple, la poutre 12 et la cavité 50 de la manchette 14 peuvent présenter un profil droit, non incurvé selon la direction D1/D4 (non représenté). Dans un autre mode de réalisation non représenté, l'organe de liaison 10 est dépourvu de mécanisme d'articulation de sorte que la poutre 12 soit fixe par rapport au siège auquel elle est reliée. Pour autre exemple, la manchette 14 peut avoir des première et deuxième dimensions extérieures identiques et/ou présenter toute autre géométrie autorisant son emboîtement sur la poutre 12, de préférence selon un mouvement de translation.

## Revendications

1. Dispositif (6) d'accoudement et/ou de séparation pour siège (1-3) de véhicule de transport, comprenant une poutre (12) destinée à être reliée au siège (1-3) et une manchette (14) amovible dotée d'une cavité longitudinale (50) configurée pour s'emboîter sur la poutre (12), **caractérisé en ce que** la poutre (12) et la cavité longitudinale (50) de la manchette (14) présentent chacune une section symétrique par rapport à un premier plan longitudinal et symétrique par rapport à un deuxième plan longitudinal perpendiculaire au premier plan longitudinal.

2. Dispositif (6) selon la revendication 1, dans lequel la manchette (14) forme deux premières surfaces extérieures (33, 34) parallèles l'une à l'autre et deux deuxièmes surfaces extérieures (36, 38) parallèles l'une à l'autre et perpendiculaires aux premières surfaces (33, 34), les premières surfaces (33, 34) étant espacées l'une de l'autre de manière à définir une première largeur de manchette (14) supérieure ou égale à une largeur de référence, par exemple de 40 mm, les deuxièmes surfaces (36, 38) étant espacées l'une de l'autre de manière à définir une deuxième largeur de manchette (14) inférieure à la largeur de référence.

3. Dispositif (6) selon la revendication 1 ou 2, comprenant des moyens de retenue de la manchette (14), les moyens de retenue comprenant au moins un organe élastique (80) interposé entre la poutre (12) et la manchette (14) et/ou au moins un organe de fixation tel qu'une vis.

4. Dispositif (6) selon l'une quelconque des revendications 1 à 3, comprenant un mécanisme d'articulation (60) configuré pour relier la poutre (12) au siège (1-3) de manière à autoriser un déplacement de la poutre (12) par rapport au siège (1-3) entre une position d'utilisation et une position escamotée.

5. Dispositif (6) selon la revendication 4, dans lequel le mécanisme d'articulation (60) comprend un palier (62) destiné à être fixé au siège (1-3), un arbre (64) relié au palier (62) et une noix (61) solidaire de la poutre (12) et montée à rotation sur l'arbre (64).

6. Siège (1-3) pour véhicule de transport, comprenant au moins un dispositif (6) d'accoudement et/ou de séparation selon l'une quelconque des revendications 1 à 5.

7. Véhicule de transport, par exemple ferroviaire, comprenant au moins un siège (1-3) selon la revendication 6.

8. Procédé de montage d'un dispositif (6) selon l'une quelconque des revendications 1 à 5, comprenant une étape d'emboîtement de la manchette (14) sur la poutre (12).

9. Procédé de maintenance d'un dispositif (6) selon l'une quelconque des revendications 1 à 5, comprenant une étape de retrait de la manchette (14) de la poutre (12) et une étape d'emboîtement d'une manchette (14) de remplacement.
